# EUROPÄISCHE PATENTSCHRIFT

(11) **EP 2 021 203 B1**
(45) Veröffentlichungstag und Bekanntmachung des Hinweises auf die Patenterteilung: **02.05.2018**
(21) Anmeldenummer: 06753244.0
(22) Anmeldetag: 31.05.2006
(51) Int. Cl.: B60L 13/00, B60M 3/00

(54) **ANORDNUNG MIT EINER VIELZAHL AN ELEKTRISCHEN SCHALTERN, INSBESONDERE FÜR EINE MAGNETSCHWEBEBAHNSTRECKE**
SYSTEM COMPRISING A PLURALITY OF ELECTRICAL SWITCHES, ESPECIALLY FOR A MAGNETIC LEVITATION RAILWAY LINE
DISPOSITIF COMPRENANT UNE PLURALITE DE COMMUTATEURS ELECTRIQUES, DESTINE EN PARTICULIER A UNE VOIE A LEVITATION MAGNETIQUE

(43) Veröffentlichungstag der Anmeldung: 11.02.2009
(73) Patentinhaber: Siemens Aktiengesellschaft, 80333 München (DE)
(72) Erfinder: ENGEL, Markus, 90469 Nürnberg (DE); KARL, Harald, 90765 Fürth (DE)
(86) Internationale Anmeldenummer: PCT/DE2006/000969
(87) Internationale Veröffentlichungsnummer: WO 2007/137536

(56) Entgegenhaltungen:
- EP-A1- 1 657 608
- EP-A2- 1 050 427
- EP-A2- 1 176 764
- DE-A1- 10 139 318
- JP-A- 63 167 603

## Beschreibung

Die Erfindung bezieht sich auf eine Anordnung mit den Merkmalen gemäß dem Oberbegriff des Anspruchs 1.

DE 101 39 318 A1 betrifft ein Verfahren zur Fehlererkennung in einem elektrischen Strahlennetz. Zur Fehlererkennung in einem elektrischen Strahlennetz mit einem Streckenkabel und mehreren daran anschaltbaren Abzweigen ist vorgesehen, dass eine zentrale Steuereinrichtung durch überwachende Abzweigschutzgeräte die Lage des Fehlers im Strahlennetz ermittelt und bei einem Fehler auf dem Streckenkabel dessen Abschaltung auslöst.

Im Bereich der Eisenbahntechnik, insbesondere im Bereich der Magnetschwebebahntechnik, ist man bestrebt, die Zugfolgezeiten der Fahrzeuge so gering wie möglich zu wählen, um einen maximalen Durchsatz der Fahrzeuge auf der Strecke zu erreichen. Minimale Zugfolgezeiten lassen sich im Bereich der Magnetschwebebahntechnik erreichen, indem eine so genannte Bereichsüberlappung zugelassen wird. Unter einer Bereichsüberlappung ist dabei zu verstehen, dass sich unter bestimmten vorgegebenen Randbedingungen zwei oder mehr Fahrzeuge innerhalb ein und desselben Antriebs- bzw. Betriebleittechnikbereiches bewegen dürfen. Nachteilig ist hierbei jedoch, dass sich zwei in ein und demselben Antriebs- bzw. Betriebsleittechnikbereich bewegende Fahrzeuge unter Umständen gegenseitig unerwünscht beeinflussen können, nämlich dann, wenn innerhalb eines Motorsystems gleichzeitig zwei Statorabschnitte eingeschaltet werden.

Jedoch auch dann, wenn sich in einem Antriebs- bzw. Betriebsleittechnikbereich jeweils nur ein einziges Fahrzeug bewegt, ist es grundsätzlich nachteilig, wenn zwei Statorabschnitte gleichzeitig eingeschaltet werden. Ein gleichzeitiges Betreiben zweier Statorabschnitte kann nämlich im ungünstigsten Fall zu einem einseitigen Absetzen des Fahrzeugs und/oder zum Nichterreichen des jeweils nächsten Halteplatzes führen. Beide Fehlerereignisse sind unerwünscht, da sie den Betriebsablauf drastisch stören können. Es ist also dafür Sorge zu tra-Jedoch auch dann, wenn sich in einem Antriebs- bzw. Betriebsleittechnikbereich jeweils nur ein einziges Fahrzeug bewegt, ist es grundsätzlich nachteilig, wenn zwei Statorabschnitte gleichzeitig eingeschaltet werden. Ein gleichzeitiges Betreiben zweier Statorabschnitte kann nämlich im ungünstigsten Fall zu einem einseitigen Absetzen des Fahrzeugs und/oder zum Nichterreichen des jeweils nächsten Halteplatzes führen. Beide Fehlerereignisse sind unerwünscht, da sie den Betriebsablauf drastisch stören können. Es ist also dafür Sorge zu tragen, dass das Einschalten mehr als eines Statorabschnitts eines Motorsystems sehr zuverlässig verhindert wird.

Der Erfindung liegt demgemäß die Aufgabe zugrunde, eine Anordnung mit einer Vielzahl an elektrischen Schaltern anzugeben, bei der sich unerwünschte Schaltzustände zuverlässig verhindern lassen.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass jedem Schalter der Anordnung jeweils zumindest eine Überwachungseinrichtung zum Erfassen des jeweiligen Schaltzustandes des Schalters zugeordnet ist. Außerdem stehen alle Überwachungseinrichtungen untereinander in einer Datenverbindung, über die die Schaltzustände aller Schalter jeweils jeder Überwachungseinrichtung bekannt gemacht werden.

Ein wesentlicher Vorteil der erfindungsgemäßen Anordnung ist darin zu sehen, dass fehlerhafte Zustände sehr zuverlässig identifiziert werden können, weil jedem Schalter eine Überwachungseinrichtung zugeordnet ist und weil die Datenverbindung zwischen den einzelnen Überwachungseinrichtungen sicherstellt, dass alle Überwachungseinrichtungen nicht nur die "eigenen" Schaltzustände, sondern auch die aller übrigen Schalter kennen können und Fehler ggf. melden können.

Wie bereits eingangs erwähnt, besteht insbesondere im Bereich der Magnetschwebebahntechnik das Problem, unerwünschte Schaltzustände zu vermeiden, um einen sicheren Betriebsablauf auch bei einem großen Fahrzeugdurchsatz zu gewährleisten.

Demgemäß ist es erfindungsgemäß vorgesehen, wenn die Anordnung einen Bestandteil einer Magnetschwebebahnstrecke bzw. eines Magnetschwebebahnstreckenabschnitts mit einer Vielzahl an Statorabschnitten bildet, wobei jede Einspeisestelle eines jeden Statorabschnitts mit einem Einspeiseschalter und jede Sternpunktstelle eines jeden Statorabschnitts jeweils mit einem Sternpunktschalter versehen ist. Jedem Einspeiseschalter und jedem Sternpunktschalter ist dabei vorzugsweise jeweils mindestens eine Überwachungseinrichtung zugeordnet. Ein wesentlicher Vorteil dieser Ausgestaltung der Anordnung ist darin zu sehen, dass ein gleichzeitiges Einschalten zweier Statorabschnitte ein und desselben Motorsystems zuverlässig verhindert werden kann, indem die Schaltzustände aller Schalter der Anordnung kontinuierlich überwacht werden.

Ein besonders hohes Maß an Sicherheit wird erfindungsgemäß damit erreicht, wenn jeder Schalter jeweils mit mindestens zwei Überwachungseinrichtungen in Verbindung steht. Ein solch redundanter Aufbau gewährleistet, dass selbst im Falle eines Ausfalls einer Überwachungseinrichtung jeweils zumindest noch eine andere Überwachungseinrichtung in der Lage ist, einen ungünstigen Schaltzustand zu detektieren und entsprechend anzuzeigen bzw. abzustellen.

Im Hinblick auf einen möglichst einfachen Aufbau der Anordnung ist es erfindungsgemäß vorgesehen, wenn jede Überwachungseinrichtung jeweils mit mindestens zwei Schaltern in Verbindung steht, die zu unterschiedlichen, vorzugsweise aneinandergrenzenden Statorabschnitten gehören. Bei dieser Ausgestaltung der Anordnung wird der Tatsache Rechnung getragen, dass im Bereich der Magnetschwebebahntechnik aufeinanderfolgende Statorabschnitte unmittelbar aneinandergrenzen, so dass mindestens zwei Schalter, beispielsweise ein Sternpunktschalter des einen Statorabschnitts und ein Einspeiseschalter des jeweils benachbarten Statorabschnitts mit minimalem Aufwand mit ein und derselben Überwachungseinrichtung überwacht werden können.

Mit Blick auf eine möglichst störungsfreie und zuverlässige Datenübertragung umfasst die Datenverbindung erfindungsgemäß zumindest einen Datenübertragungsring, der alle Überwachungseinrichtungen miteinander verbindet. Ein Datenübertragungsring weist nämlich aufgrund seiner Ringstruktur den Vorteil auf, dass es zu einer Unterbrechung der Datenverbindung selbst dann nicht kommen kann, wenn der Datenübertragungsring an einer Stelle unterbrochen wird; denn aufgrund der Ringstruktur bleiben die Überwachungseinrichtungen bei einer Ringunterbrechung noch über den "geöffneten Restring" verbunden.

Ein besonders hohes Maß an Datensicherheit wird erreicht, wenn die Datenverbindung zwei redundant arbeitende Datenübertragungsringe umfasst, die jeweils alle Überwachungseinrichtungen miteinander verbinden. In einem solchen Fall kann einer der zwei Datenübertragungsringe komplett ausfallen, ohne dass es zu einer Unterbrechung der Datenverbindung kommt, da die Datenverbindung über den jeweils anderen, noch arbeitenden Datenübertragungsring aufrechterhalten werden kann.

Die Erfindung bezieht sich darüber hinaus auf ein Verfahren zum Steuern einer Magnetschwebebahnstrecke bzw. eines Magnetschwebebahnstreckenabschnitts mit zumindest zwei Statorabschnitten gemäß Patentanspruch 4.

Um bei einem solchen Verfahren zu gewährleisten, dass es zu keinem unerwünschten Einschalten mehrerer Statorabschnitte gleichzeitig kommen kann, wird erfindungsgemäß das Verfahren nach Anspruch 4 vorgesehen. Dabei werden für jeden Statorabschnitt des Magnetschwebebahnstreckenabschnitts die Schalterstellung des Einspeiseschalters des jeweiligen Statorabschnitts sowie die Schalterstellung der Sternpunktschalters des jeweiligen Statorabschnitts mit beispielsweise statorabschnittsbezogenen Überwachungseinrichtungen überwacht. Allen Überwachungseinrichtungen werden jeweils zusätzlich auch die Schaltzustände in allen übrigen Statorabschnitten übermittelt, so dass mit jeder Überwachungseinrichtung überprüft werden kann, ob ein unzulässiger Betriebszustand, insbesondere in dem jeweils zugeordneten Statorabschnitt, vorliegt oder nicht. Zumindest ein Einspeiseschalter oder zumindest ein Sternpunktschalter wird mit der jeweils zugeordneten Überwachungseinrichtung abgeschaltet, wenn ein unzulässiger Betriebszustand in zumindest einem Statorabschnitt erkannt wird.

Als unzulässige Betriebszustände kommen dabei alle denkbaren Prozesszustände in Betracht, die unerwünscht sind, sei es beispielsweise der eingangs genannte Fall, dass innerhalb eines Motorsystems gleichzeitig zwei Statorabschnitte eingeschaltet sind, oder auch andere Störfälle wie Übertemperatur, Überstrom, Überspannung oder Einsetzen einer Störschreiberfunktion.

Bezüglich der Vorteile des erfindungsgemäßen Verfahrens gemäß Anspruch 4 sei auf die obigen Ausführungen im Zusammenhang mit der erfindungsgemäßen Anordnung verwiesen.

Erfindungsgemäß ist vorgesehen, dass mit den Überwachungseinrichtungen überprüft wird, ob gleichzeitig zwei oder mehr Statorabschnitte der Magnetschwebebahnstrecke eingeschaltet sind, und wenn in einem solchen Falle einzelne oder alle der betroffenen Statorabschnitte ausgeschaltet werden.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung, die einen Bestandteil einer Magnetschwebebahnstrecke mit einer Vielzahl an Statorabschnitten bildet,
- Figur 2: die Datenverbindung zwischen Überwachungseinrichtungen der Anordnung gemäß Figur 1 im Detail,
- Figur 3: ein Ausführungsbeispiel für den Aufbau einer Überwachungseinrichtung für die Anordnung gemäß Figur 1,
- Figur 4: ein Ausführungsbeispiel für eine Telegrammstruktur für die Datenübertragung zwischen den Überwachungseinrichtungen bei der Anordnung gemäß Figur 1 sowie deren Weiterverarbeitung innerhalb der Überwachungseinrichtungen und
- Figur 5: ein Ausführungsbeispiel für die Datenübertragung im Falle einer Unterbrechung der die Überwachungseinrichtungen gemäß Figur 1 verbindenden Datenübertragungsringe.

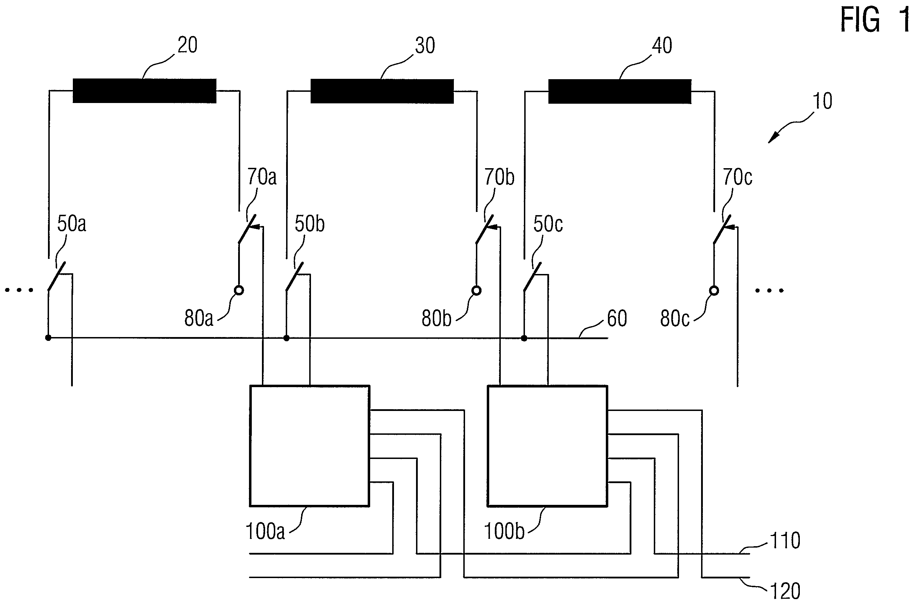

In den Figuren 1 bis 5 werden aus Gründen der Übersichtlichkeit für identische oder vergleichbare Komponenten stets dieselben Bezugszeichen verwendet.

In der Figur 1 erkennt man ein Ausführungsbeispiel für eine Anordnung 10, die einen Bestandteil eines Abschnitts einer Magnetschwebebahnstrecke bildet. Die Anordnung 10 weist eine Vielzahl an Statorabschnitten auf, von denen in der Figur 1 der Übersichtlichkeit halber nur drei dargestellt sind. Diese tragen die Bezugszeichen 20, 30 und 40.

Jeder der Statorabschnitte 20, 30 und 40 ist jeweils mit einem Einspeiseschalter 50a, 50b bzw. 50c verbunden, mit dem eine elektrische Verbindung zwischen dem jeweiligen Statorabschnitt und einem Streckenkabel 60 hergestellt werden kann.

Jeder der Statorabschnitte 20, 30 und 40 steht darüber hinaus mit einem Sternpunktschalter 70a, 70b bzw. 70c in Verbindung, mit dem eine Verbindung zwischen dem jeweiligen Statorabschnitt und dem zugehörigen Sternpunkt 80a, 80b bzw. 80c hergestellt werden kann. Hierzu sind die S'ternpunktschalter 70a, 70b, 70c jeweils dreiphasig ausgeführt, was jedoch in der Figur 1 nicht weiter dargestellt ist.

Es lässt sich in der Figur 1 erkennen, dass die Sternpunktschalter sowie die Einspeiseschalter mit einer Vielzahl an Überwachungseinrichtungen überwacht werden, von denen in der Figur 1 zwei gezeigt sind. Die beiden Überwachungseinrichtungen sind mit den Bezugszeichen 100a und 100b gekennzeichnet.

Die Überwachungseinrichtung 100a ist örtlich an der Übergangs- bzw. Koppelstelle zwischen den beiden Statorabschnitten 20 und 30 angeordnet und elektrisch an den Sternpunktschalter 80a des Statorabschnitts 20 sowie an den Einspeiseschalter 50b des Statorabschnitts 30 angeschlossen.

In entsprechender Weise ist die Überwachungseinrichtung 100b örtlich im Bereich der Übergangs- bzw. Koppelstelle zwischen den Statorabschnitten 30 und 40 angeordnet; sie steht elektrisch mit dem Einspeiseschalter 50c des Statorabschnitts 40 sowie mit dem Sternpunktschalter 70b des Statorabschnitts 30 in Verbindung, um diese zu steuern sowie zu überwachen.

In der Figur 1 ist darüber hinaus dargestellt, dass die Überwachungseinrichtungen 100a und 100b sowie alle weiteren Überwachungseinrichtungen, die den Statorabschnitten der Magnetschwebebahnstrecke zugeordnet sind, untereinander mittels zweier Datenübertragungsringe datenmäßig verbunden sind. Der eine der beiden Datenübertragungsringe trägt in der Figur 1 das Bezugszeichen 110 und der zweite Datenübertragungsring das Bezugszeichen 120. Die beiden Datenübertragungsringe 110 und 120 sind vorzugsweise identisch aufgebaut und arbeiten vergleichbar.

Die Anordnung gemäß Figur 1 lässt sich wie folgt betreiben:
Zur Steuerung eines Fahrzeugs, das sich auf einem der Statorabschnitte 20, 30 bzw. 40 bewegt, werden die entsprechenden Einspeiseschalter 50a, 50b bzw. 50c und die entsprechenden Sternpunktschalter 70a, 70 und 70c ein- bzw. ausgeschaltet. Dabei wird sichergestellt, dass jeweils nur einer der Statorabschnitte 20, 30 oder 40 eingeschaltet wird; die übrigen Statorabschnitte bleiben ausgeschaltet. Um einen solchen Schaltzustand zu gewährleisten, sind die Überwachungseinrichtungen derart ausgestaltet, dass sie stets nur einen der Statorabschnitte, nämlich den jeweils für den Antrieb des Fahrzeugs erforderlichen, einschalten sowie die übrigen abschalten. Die beiden Datenübertragungsringe 110 und 120 ermöglichen es dabei, jede der Überwachungseinrichtungen jeweils über den Schaltzustand aller Schalter der Anordnung 10 zu informieren, so dass jede Überwachungseinrichtung autark in der Lage ist, zu entscheiden, ob die jeweils zugeordneten Schalter ein- oder ausgeschaltet werden müssen.

Selbst wenn es zu einer Unterbrechung einer der beiden Datenübertragungsringe 110 und 120 kommt, bleibt aufgrund der Redundanz dennoch gewährleistet, dass alle Überwachungseinrichtungen über den jeweiligen Schaltzustand aller übrigen Schalter der Anordnung 10 informiert werden, da der jeweils andere Datenübertragungsring für die Datenübertragung noch vorhanden und in Betrieb bleibt.

In der Figur 1 ist aus Gründen der Übersicht nur eine einzige Überwachungseinrichtung für jeden der Schalter der Anordnung 10 dargestellt. Eine besonders große Redundanz lässt sich jedoch erreichen, wenn jedem Schalter mindestens zwei oder mehr Überwachungseinrichtungen zugeordnet werden, so dass im Falle eines Ausfalls einer der Überwachungseinrichtungen trotzdem sichergestellt bleibt, dass alle Schalter der Anordnung 10 die richtigen Schaltzustände aufweisen.

An die Datenübertragungsringe 110 und/oder 120 kann im Übrigen auch eine Zentrale angeschlossen sein, an die die Überwachungseinrichtungen ihre Meldungen schicken und die die Überwachungseinrichtungen überwacht und/oder steuert. Eine der Überwachungseinrichtungen der Anordnung 10 kann beispielsweise in einer solchen Zentrale integriert sein; alternativ kann auch die Zentrale in einer der Überwachungseinrichtungen enthalten sein.

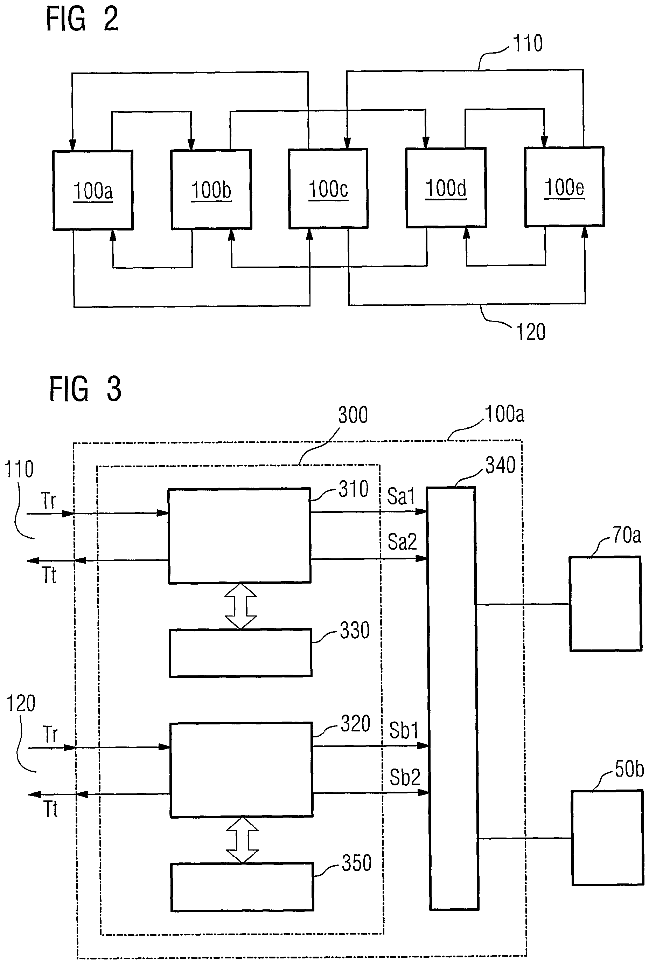

In der Figur 2 ist die Ringstruktur der beiden Datenübertragungsringe 110 und 120 nochmals näher im Detail gezeigt. Man erkennt eine Vielzahl an Überwachungseinrichtungen, nämlich die Überwachungseinrichtungen 100a und 100b gemäß Figur 1 sowie beispielhaft weitere Überwachungseinrichtungen, die mit den Bezugszeichen 100c, 100d und 100e gekennzeichnet sind. Alle diese Überwachungseinrichtungen stehen sowohl über den ersten Datenübertragungsring 110 als auch über den zweiten Datenübertragungsring 120 untereinander in Verbindung, um eine ausfallsichere Datenübertragung zu gewährleisten.

In der Figur 3 ist ein Ausführungsbeispiel für die Überwachungseinrichtung 100a gemäß Figur 1 bzw. Figur 2 näher gezeigt. Man erkennt eine Steuereinrichtung 300, die zwei Steuermodule 310 und 320 aufweist.

Das eine der beiden Steuermodule 310 steht mit dem ersten Datenübertragungsring 110 in Verbindung und wertet die eingangsseitig eingehenden Datentelegramme Tr, die von den übrigen Überwachungseinrichtungen geliefert werden, aus. Hierzu greift das Steuermodul 310 auf ein zugeordnetes Programmmodul 330 zu, in dem die entsprechende Soft- bzw. Firmware zur Steuerung des Steuermoduls 310 hinterlegt ist. Das Steuermodul 310 analysiert dann die von den übrigen Überwachungseinrichtungen gelieferten Schaltzustände der übrigen Schalter und entscheidet gemäß den Vorgaben des Programmmoduls 330, ob einer oder beide der zugeordneten Schalter, also der Sternpunktschalter 70a oder der Einspeiseschalter 50b geöffnet werden müssen, um einen unzulässigen Schaltzustand zu vermeiden.

Falls das Steuermodul 310 eine solche Ausschaltentscheidung trifft, so erzeugt es ausgangsseitig ein entsprechendes Ausschaltsignal Sa1 oder Sa2 und übermittelt dieses zu einer Schalteinrichtung 340 der Überwachungseinrichtung 100a. Die Aufgabe der Schalteinrichtung 340 besteht darin, den Sternpunktschalter 70a auszuschalten, wenn das Ausschaltsignal Sa1 eingangsseitig anliegt, und den Einspeiseschalter 50b auszuschalten, wenn eingangsseitig das Ausschaltsignal Sa2 anliegt.

Die beiden Schalter 50b und 70a sind in der Figur 3 schematisch nur als Blöcke dargestellt, die mit der Schalteinrichtung 340 der Überwachungseinrichtung 100a in Verbindung stehen.

Das Steuermodul 320 der Steuereinrichtung 300 arbeitet ebenso wie das Steuermodul 310. Dies bedeutet, dass es die eingangsseitig anliegenden Datentelegramme Tr des zweiten Datenübertragungsrings 120 auswertet und unter Heranziehung eines mit dem Steuermodul 320 in Verbindung stehenden Programmmoduls 350 entscheidet, ob entsprechende Ausschaltsignale Sb1 bzw. Sb2 zum Ausschalten des Sternpunktschalters 70a bzw. des Einspeiseschalters 50b erzeugt werden müssen. Falls dies der Fall ist, werden die entsprechenden Signale Sb1 bzw. Sb2 zur Schalteinrichtung 340 übertragen, die dann ausgangsseitig die entsprechende Umschaltung der betroffenen Schalter hervorruft.

Darüber hinaus haben die beiden Steuermodule 310 und 320 die Aufgabe, die übrigen Überwachungseinrichtungen der Anordnung 10 gemäß Figur 1 über die Schaltzustände der ihnen zugeordneten Schalter 70a bzw. 50b zu informieren. Um dies zu gewährleisten, fügen die Steuermodule 310 und 320 in die eingehenden Datentelegramme Tr die Informationen, die ihre zugeordneten Schalter 50b bzw. 70a betreffen, in die Datentelegramme ein und senden diese ausgangsseitig über den ihnen jeweils zugeordneten Datenübertragungsring 110 und 120 an die übrigen Überwachungseinrichtungen.

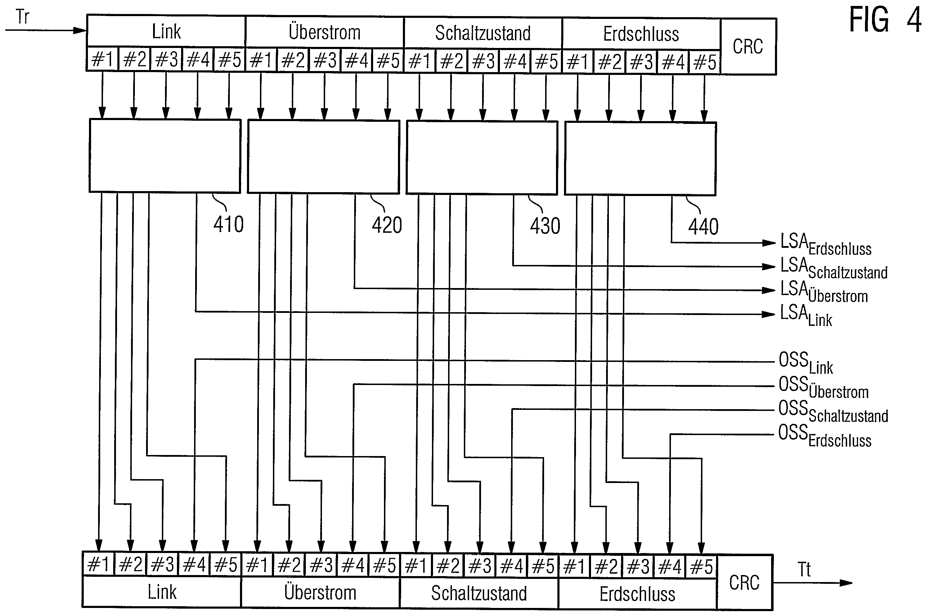

In der Figur 4 ist schematisch dargestellt, wie das Telegrammauswerten sowie das Telegrammweiterleiten in den beiden Steuermodulen 310 und 320 beispielsweise aussehen kann. In Analyseblöcken 410, 420, 430 und 440 wird das eingehende Datentelegramm Tr auf seinen Inhalt hin untersucht.

In der Figur 4 wird beispielhaft davon ausgegangen, dass eingehende Datentelegramme Tr und ausgehende Datentelegramme Tt jeweils insgesamt vier unabhängige Informationsblöcke enthalten können: Einer der Informationsblöcke ist mit dem Wort "Erdschluss" gekennzeichnet; dieser Informationsblock hat die Aufgabe, etwaige Erdschlüsse in der Anordnung 10 gemäß Figur 1 zu kennzeichnen. Ein weiterer Informationsblock, der mit dem Begriff "Schaltzustand" bezeichnet ist, gibt an, wie die Schaltzustände der einzelnen Schalter der Anordnung gemäß Figur 10 aussehen. Ein dritter Informationsblock ist mit dem Wort "Überstrom" gekennzeichnet und zeigt an, wenn ein Überstrom in der Anordnung 10 gemäß Figur 1 auftritt. In dem Informationsblock "Link" werden Informationen übertragen, die den Datenübertragungsring 110 bzw. 120 gemäß Figur 1 betreffen.

Die Analyseblöcke 410, 420, 430 und 440 analysieren die entsprechenden Informationsabschnitte des empfangenen Datentelegramms Tr und erzeugen entsprechende Steuersignale LSA_{Erdschluss}, LSA_{Schaltzustand}, LSA_{Überstrom}, LSA_{Link}, die beispielsweise zu der Schalteinrichtung 340 übertragen werden.

Darüber hinaus sind die Analyseblöcke 410, 420, 430 und 440 dazu geeignet, ausgangsseitig Datentelegramme Tt zu erzeugen, die über den jeweils zugeordneten Datenübertragungsring 110 bzw. 120 an die übrigen Überwachungseinrichtungen weitergeleitet werden.

Die Analyseblöcke 410, 420, 430 und 440 berücksichtigen bei der Erzeugung der Ausgangsdatentelegramme Tt dabei den jeweiligen Zustand ihres Statorabschnitts, beispielsweise im Hinblick auf die Schaltzustände der zugeordneten Schalter 50b bzw. 70a sowie im Hinblick auf übrige Zustände, die für die übrigen Überwachungseinrichtungen relevant sein können. Entsprechende Steuerinformationen OSS_{Erdschluss}, OSS_{Schaltzustand}, OSS_{Ü-berstrom}, OSS_{Link} werden in die ausgehenden Datentelegramme Tt eingearbeitet, wie schematisch in der Figur 4 gezeigt ist.

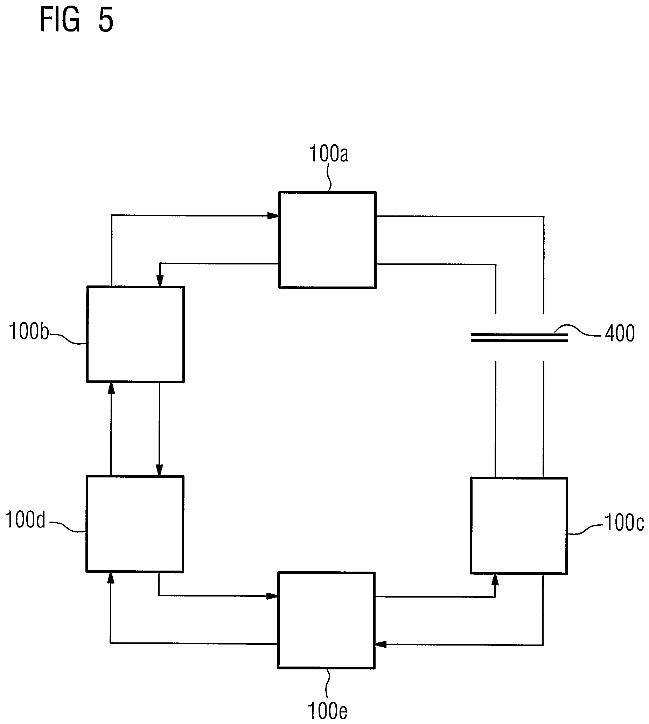

In der Figur 5 ist beispielhaft dargestellt, dass auch im Falle einer Unterbrechung der beiden Datenübertragungsringe 110 bzw. 120 gemäß Figur 2 eine Datenübertragung zwischen den einzelnen Überwachungseinrichtungen möglich bleibt, wenn die beiden Ringe mit unterschiedlichen Datenübertragungsrichtungen betrieben werden. Im Falle einer gegenläufigen Übertragungsrichtung bleibt es nämlich selbst im Falle einer Ringunterbrechung 400, die in der Figur 5 beispielhaft zwischen den Überwachungseinrichtungen 110a und 100c eintritt, möglich, von jeder Überwachungseinrichtung zu jeder anderen Überwachungseinrichtung Datentelegramme zu übersenden. Alternativ können beide Datenübertragungsringe auch bidirektional arbeiten, um Übertragungsstörungen zu vermeiden.

### Bezugszeichenliste

- 10: Anordnung
- 20,30,40: Statorabschnitte
- 50a,50b,50c: Einspeiseschalter
- 60: Streckenkabel
- 70a,70b,70c: Sternpunktschalter
- 80a,80b,80c: Sternpunkte
- 100a,100b: Überwachungseinrichtungen
- 100c,100d,: Überwachungseinrichtungen
- 100e: Überwachungseinrichtung
- 110,120: Datenübertragungsringe
- 300: Steuereinrichtung
- 310,320: Steuermodule
- 330: Programmmodul
- 340: Schalteinrichtung
- 350: Programmmodul
- 410,420: Analyseblöcke
- 430,440,: Analyseblöcke
- Sa1,Sa2: Ausschaltsignale
- Sb1,Sb2: Ausschaltsignale
- Tt: Datentelegramme
- Tr: Datentelegramm

## Patentansprüche

1. Anordnung (10) mit einer Vielzahl an elektrischen Schaltern (50a, 50b, 50c, 70a, 70b, 70c), wobei
- jedem Schalter jeweils zumindest eine Überwachungseinrichtung (100a, 100b) zum Erfassen des jeweiligen Schaltzustands des Schalters (50a, 50b, 50c, 70a, 70b, 70c) zugeordnet ist,
- alle Überwachungseinrichtungen (100a, 100b) untereinander in einer Datenverbindung (110, 120) stehen, über die die Schaltzustände aller Schalter jeder Überwachungseinrichtung bekannt gemacht werden,
- die Anordnung einen Bestandteil eines Magnetschwebebahnstreckenabschnitts mit einer Vielzahl an Statorabschnitten (20, 30, 40) bildet,
- wobei jede Einspeisestelle eines jeden Statorabschnitts mit einem Einspeiseschalter (50a, 50b, 50c) und jede Sternpunktstelle (80a, 80b, 80c) eines jeden Statorabschnitts jeweils mit einem Sternpunktschalter (70a, 70b, 70c) versehen ist,
- jedem Einspeiseschalter jeweils mindestens eine Überwachungseinrichtung zugeordnet ist,
**dadurch gekennzeichnet, dass**
- die Datenverbindung zumindest einen Datenring (110, 120) umfasst, der alle Überwachungseinrichtungen miteinander verbindet, und jedem Sternpunktschalter jeweils mindestens eine Überwachungseinrichtung zugeordnet ist,
- jede Überwachungseinrichtung jeweils mit mindestens zwei Schaltern in Verbindung steht, die zu unterschiedlichen, vorzugsweise aneinandergrenzenden, Statorabschnitten gehören und
- die Überwachungseinrichtungen ausgebildet sind zu prüfen, ob gleichzeitig zwei oder mehr Statorabschnitte des Magnetschwebebahnstreckenabschnitts eingeschaltet sind, und dass in einem solchen Falle einzelne oder alle der betroffenen Statorabschnitte ausschaltbar sind.

2. Anordnung nach Anspruch 1,
**dadurch gekennzeichnet, dass** die Datenverbindung zwei redundant arbeitende Datenringe umfasst, die jeweils alle Überwachungseinrichtungen miteinander verbinden.

3. Anordnung nach einem der voranstehenden Ansprüche,
**dadurch gekennzeinchnet,** dass jeder Schalter jeweils mit mindestens zwei Überwachungseinrichtungen in Verbindung steht.

4. Verfahren zum Steuern eines Magnetschwebebahnstreckenabschnitts mit zumindest zwei Statorabschnitten (20, 30, 40),
**dadurch gekennzeinchnet,** dass
- für jeden Statorabschnitt des Magnetschwebebahnstreckenabschnitts die Schaltstellung des Einspeiseschalters (50a, 50b, 50c) des jeweiligen Statorabschnitts und die Schaltstellung des Sternpunktschalters (70a, 70b, 70c) des jeweiligen Statorabschnitts mit zumindest einer Überwachungseinrichtung (100a, 100b) überwacht werden,
- allen Überwachungseinrichtungen jeweils die Schaltzustände der Einspeiseschalter und der Sternpunktschalter aller Statorabschnitte über eine Datenverbindung übermittelt werden, wobei die Datenverbindung zumindest einen Datenring (110, 120) umfasst, der alle Überwachungseinrichtungen miteinander verbindet,
- mit jeder Überwachungseinrichtung überprüft wird, ob in den jeweils zugeordneten Statorabschnitten ein unzulässiger Betriebszustand vorliegt,
- zumindest ein Einspeiseschalter und/oder zumindest ein Sternpunktschalter mit der jeweils zugeordneten Überwachungseinrichtung abgeschaltet wird, wenn ein unzulässiger Betriebszustand in zumindest einem Statorabschnitt erkannt wird,
- mit den Überwachungseinrichtungen überprüft wird, ob gleichzeitig zwei oder mehr Statorabschnitte des Magnetschwebebahnstreckenabschnitts eingeschaltet sind, und dass in einem solchen Falle einzelne oder alle der betroffenen Statorabschnitte ausgeschaltet werden.

## Claims

1. System (10) comprising a plurality of electrical switches (50a, 50b, 50c, 70a, 70b, 70c), wherein
- each switch has in each case at least one associated monitoring device (100a, 100b) for detecting the respective switching state of the switch (50a, 50b, 50c, 70a, 70b, 70c),
- all the monitoring devices (100a, 100b) are interconnected by a data connection (110, 120) via which the switching states of all the switches are disclosed to each monitoring device,
- the system forms a constituent part of a magnetic levitation railway line section comprising a plurality of stator sections (20, 30, 40),
- with each feed location of each stator section being provided with a feed switch (50a, 50b, 50c) and each star point location (80a, 80b, 80c) of each stator section being provided in each case with a star point switch (70a, 70b, 70c),
- each feed switch has in each case at least one associated monitoring device,
**characterized in that**
- the data connection comprises at least one data ring (110, 120) which connects all the monitoring devices to one another, and each star point switch has in each case at least one associated monitoring device,
- each monitoring device is connected in each case to at least two switches which belong to different, preferably adjoining, stator sections and
- the monitoring devices are configures to check whether two or more stator sections of the magnetic levitation railway line section are switched on at the same time, and **in that** individual or all of the affected stator sections can be switched off in such a case.

2. System according to Claim 1,
**characterized in that**
the data connection comprises two redundantly operating data rings which in each case connect all the monitoring devices to one another.

3. System according to one of the preceding claims,
**characterized in that**
each switch is connected in each case to at least two monitoring devices.

4. Method for controlling a magnetic levitation railway line section comprising at least two stator sections (20, 30, 40), **characterized in that**
- for each stator section of the magnetic levitation railway line section, the switching position of the feed switch (50a, 50b, 50c) of the respective stator section and the switching position of the star point switch (70a, 70b, 70c) of the respective stator section are monitored by at least one monitoring device (100a, 100b),
- the switching states of the feed switches and the star point switches of all the stator sections are transmitted via a data connection to all the monitoring devices in each case, with the data connection comprising at least one data ring (110, 120) which connects all the monitoring devices to one another,
- a check is made with each monitoring device to determine whether there is an impermissible operating state in the respectively associated stator sections,
- at least one feed switch and/or at least one star point switch is switched off by the respectively associated monitoring device when an impermissible operating state is identified in at least one stator section,
- a check is made with the monitoring devices to determine whether two or more stator sections of the magnetic levitation railway line section are switched on at the same time, and **in that** individual or all of the affected stator sections are switched off in such a case.

## Revendications

1. Système (10), comprenant une pluralité d'interrupteurs (50a, 50b, 50c, 70a, 70b, 70c) électriques, dans lequel
- à chaque interrupteur est affecté respectivement au moins un dispositif (100a, 100b) de contrôle pour détecter l'état de commutation de l'interrupteur (50a, 50b, 50c, 70a, 70b, 70c),
- tous les dispositifs (100a, 100b) de contrôle sont entre eux en une liaison (110, 120) de communication de données, par laquelle il est fait connaître, à chaque dispositif de contrôle, les états de commutation de tous les interrupteurs,
- le système forme une partie constitutive d'un tronçon de voie à lévitation magnétique, ayant une pluralité de parties (20, 30, 40) de stator,
- dans lequel chaque point d'alimentation de chaque partie de stator est pourvu d'un interrupteur (50a, 50b, 50c) d'alimentation et chaque point (80a, 80b, 80c) étoile de chaque partie de stator est pourvu respectivement d'un interrupteur (70a, 70b, 70c) étoile,
- à chaque interrupteur d'alimentation est affecté respectivement au moins un dispositif de contrôle,
**caractérisé en ce que**
- la liaison de données comprend au moins un anneau (110, 120) de données, qui relie entre eux tous les dispositifs de contrôle, et à chaque interrupteur étoile est affecté respectivement au moins un dispositif de contrôle,
- chaque dispositif de contrôle est en liaison respectivement avec au moins deux interrupteurs, qui appartiennent à des parties de stator différentes, de préférence voisines l'une de l'autre et
- les dispositifs de contrôle sont constitués pour contrôler si, en même temps, deux ou plusieurs parties de stator du tronçon de voie à lévitation magnétique sont mises sous tension et **en ce que**, dans un cas de ce genre, certains ou tous les tronçons de stator concernés sont mis hors tension.

2. Système suivant la revendication 1,
**caractérisé en ce que**
la liaison de données comprend deux anneaux de données, qui fonctionnent de manière redondante et qui relient chacun tous les dispositifs de contrôle entre eux.

3. Système suivant l'une des revendications précédentes, **caractérisé en ce que** chaque interrupteur est en liaison respectivement avec au moins deux dispositifs de contrôle.

4. Procédé de commande d'un tronçon de voie à lévitation magnétique, ayant au moins deux parties (20, 30, 40) de stator,
**caractérisé en ce que**
- on contrôle, par au moins un dispositif (100a, 100b) de contrôle, pour chaque partie de stator du tronçon de voie à lévitation magnétique, la position de commutation de l'interrupteur (50a, 50b, 50c) d'alimentation de la partie de stator respective et la position de commutation de l'interrupteur (70a, 70b, 70c) étoile de la partie de stator respective,
- on transmet, par une liaison de données, à tous les dispositifs de contrôle, respectivement les états de commutation des interrupteurs d'alimentation et des interrupteurs étoile de toutes les parties de stator, la liaison de données comprenant au moins un anneau (110, 120) de données, qui relie entre eux tous les dispositifs de contrôle,
- on contrôle, par chaque dispositif de contrôle, s'il y a un état de fonctionnement inadmissible dans les parties de stator affectées,
- on ouvre au moins un interrupteur d'alimentation et/ou au moins un interrupteur étoile par le dispositif de contrôle affecté, si un état de fonctionnement inadmissible est détecté dans au moins une partie de stator,
- on contrôle, par les dispositifs de contrôle, si, en même temps, deux ou plusieurs parties de stator du tronçon de voie à lévitation magnétique sont mises sous tension et, dans un cas de ce genre, on met hors tension certaines ou toutes les parties de stator concernées.
